(19) Europäisches Patentamt
European Patent Office
Office européen des brevets

(11) **EP 3 598 674 A1**

(12) **EUROPEAN PATENT APPLICATION**
published in accordance with Art. 153(4) EPC

(43) Date of publication:
**22.01.2020 Bulletin 2020/04**

(51) Int Cl.:
**H04L 1/00** *(2006.01)*

(21) Application number: **18776231.5**

(22) Date of filing: **24.03.2018**

(86) International application number:
**PCT/CN2018/080395**

(87) International publication number:
**WO 2018/177227 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2017 CN 201710185302**

(71) Applicant: **Huawei Technologies Co., Ltd.**
**Longgang District**
**Shenzhen, Guangdong 518129 (CN)**

(72) Inventors:
• **ZHANG, Gongzheng**
**Shenzhen**
**Guangdong 518129 (CN)**

• **HUANGFU, Yourui**
**Shenzhen**
**Guangdong 518129 (CN)**
• **HUANG, Lingchen**
**Shenzhen**
**Guangdong 518129 (CN)**
• **CHEN, Ying**
**Shenzhen**
**Guangdong 518129 (CN)**
• **QIAO, Yunfei**
**Shenzhen**
**Guangdong 518129 (CN)**
• **LI, Rong**
**Shenzhen**
**Guangdong 518129 (CN)**

(74) Representative: **Pfenning, Meinig & Partner mbB**
**Patent- und Rechtsanwälte**
**Joachimsthaler Straße 10-12**
**10719 Berlin (DE)**

(54) **ENCODING METHOD, DECODING METHOD, APPARATUS AND DEVICE**

(57) This application discloses a rate matching method, and the method includes: determining, by a network device, a transmission code rate R, where R=K/M, K is a length of an information bit, M is a length of target code length, and K and M are positive integers; determining, by the network device when the transmission code rate R is greater than or equal to a first code rate threshold, to use a shortening mode for a bit sequence whose length is N, or determining, by the network device when the transmission code rate R is less than a first code rate threshold, to use a puncturing mode for a bit sequence whose length is N, where N is a length of mother code, and N is a positive integer; and performing, by the network device, polar coding on the bit sequence whose length is N, to obtain a first encoded sequence whose length is N, and shortening or puncturing, by the network device, the first encoded sequence, to obtain a second encoded sequence whose length is M. This application further provides a rate matching device corresponding to the method. According to the foregoing method and device, the puncture puncturing or shortening mode can be flexibly selected, and a performance penalty loss caused in a puncturing or shortening process is avoided.

A network device determines a transmission code rate R, where R=K/M, K is an information bit length, M is a target code length, and K and M are positive integers — 210

If the transmission code rate R is greater than or equal to a first code rate threshold, the network device determines to use a shortening mode for a bit sequence whose length is N, or if the transmission code rate R is less than a first code rate threshold, the network device determines to use a puncturing mode for a bit sequence whose length is N, where N is a mother code length, and N is a positive integer — 220

The network device performs polar coding on the bit sequence whose length is N, to obtain a first encoded sequence whose length is N, and the network device shortens or punctures the first encoded sequence, to obtain a second encoded sequence whose length is M — 230

FIG. 6

**Description**

This application claims priority to Chinese Patent Application No. 201710185302.4, filed with the Chinese Patent Office on March 25, 2017 and entitled "RATE MATCHING METHOD AND DEVICE", which is incorporated herein by reference in its entirety.

**TECHNICAL FIELD**

The present embodiments of invention relates to the field of communications technologies, and in particular, to a device method and device for processing data.

**BACKGROUND**

Channel encoding is usually used in a communications system to improve data transmission reliability, so as to ensure communication quality. A polar code proposed by Ar₁kan, a Turkish professor, is the first code that can provably achieve a Shannon capacity in theory and that has low encoding and decoding complexity. The polar code is a linear block code, an encoding matrix of the polar code is $G_N$, and an encoding process of the polar code is $x_1^N = u_1^N G_N$, where $u_1^N = (u_1, u_2, K, u_N)$ is a binary row vector with a length of $N$ (that is, a mother code length), $G_N$ is an $N \times N$ matrix, and $G_N = F_2^{\otimes(\log_2(N))}$. $F_2^{\otimes(\log_2(N))}$ is defined as a Kronecker (Kronecker) product of $\log_2 N$ matrices $F_2$, and the matrix

$$F_2 = \begin{bmatrix} 1 & 0 \\ 1 & 1 \end{bmatrix}.$$

In the encoding process of the polar code, some bits in $u_1^N$ are used to carry information, and are referred to as information bits, and an index set of these bits is defined as A ; and the other bits are set to fixed values that are pre-agreed on by a receive end and a transmit end, and are defined to as fixed bits or frozen bits, and an index set of these bits is represented by a complement $A^c$ of A. The encoding process of the polar code is equivalent to $x_1^N = u_A G_N(A) \oplus u_{A^c} G_N(A^C)$. Herein, $G_N(A)$ is a submatrix formed by rows in $G_N$ that are corresponding to indexes in the set A, and $G_N(A^C)$ is a submatrix formed by rows that are corresponding to indexes in the set $A^C$ in $G_N$. $u_A$ is an information bit set in $u_1^N$, and there are K information bits. $u_{Ac}$ is a frozen bit set in $u_1^N$, there are (N-K) frozen bits, and the frozen bits are known bits. The frozen bits are usually set to 0, but the value of the frozen bits may be randomly set provided that the receiving device and the transmitting device pre-agree on the frozen bits. When the frozen bits are set to 0, a polar code encoding output may be simplified as $x_1^N = u_A G_N(A)$, which is a $K \times N$ matrix.A polar code construction process is a process of selecting the set A, and the set A determines polar code performance. The polar code construction process is usually: determining, based on a mother code length N, that a total of N polarized channels exist, and correspond to N rows in an encoding matrix, respectively; calculating reliability of the polarized channels; and using indexes of first K polarized channels with relatively high reliability as elements of the set A, and using indexes corresponding to remaining (N-K) polarized channels as elements of the frozen bit index set $A^c$. The set A determines a bit position of an information bit, and the set $A^c$ determines a bit position of a frozen bit.

It can be learned from the encoding matrix that a code length of an original polar code (mother code) is 2 integer power, and during actual application, a polar code with any code length needs to be implemented through rate matching.

In the prior art, rate matching is implemented by using a puncturing (puncture) or shortening (shorten) solution. In the prior art, during encoding, when a length of mother code is larger than a length of target code, the length of the target code is obtained from the mother code by puncturing and during decoding, a length of mother code length is restored from the target code by padding. In the situations when the mother code includes a relatively large quantity of information bits, rate matching by directly puncturing or shortening the mother code may lead to information loss during decoding.

**SUMMARY**

Embodiments of the present application provides a rate matching method and device, to avoid a performance loss caused in a puncturing or shortening process.

According to a first aspect, this application provides a rate matching method, applied to a wireless network and including: determining, by a network device, a transmission code rate R, where R=K/M, K is an information bit length, M is a target code length, and K and M are positive integers; determining, by the network device if the transmission code rate R is greater than or equal to a first code rate threshold, to use a shortening mode for a bit sequence whose length is N, or determining, by the network device if the transmission code rate R is less than a first code rate threshold, to use a puncturing mode for a bit sequence whose length is N, where N is a mother code length, and N is a positive integer; and polar encoding, by the network device, on the bit sequence whose length is N, to obtain a first encoded sequence whose length is N, and shortening or puncturing, by the network device, the first encoded sequence, to obtain a second encoded sequence whose length is M.

According to a second aspect, this application provides a rate matching device, applied to a wireless network, and the device includes: a first determining unit, configured to determine a transmission code rate R, where R=K/M, K is an information bit length, M is a target code length, and K and M are positive integers; a second determining unit, configured to: when the transmission code rate R is greater than or equal to a first code rate threshold, use a shortening mode for a bit sequence whose length is N, or when the transmission code rate R is less than a first code rate threshold, use a puncturing mode for a bit sequence whose length is N, where N is a mother code length, and N is a positive integer; an encoding unit, configured to polar encode on the bit sequence whose length is N, to obtain a first encoded sequence whose length is N; and a processing unit, configured to shorten or puncture the first encoded sequence, to obtain a second encoded sequence whose length is M.

With reference to the first aspect and the second aspect, in a possible design, the determining, by the network device when the transmission code rate R is greater than or equal to a first code rate threshold, to use a shortening mode for a bit sequence whose length is N specifically includes: dividing, by the network device, the bit sequence whose length is N into S1 equal-length bit groups, where S1 is a positive integer; and determining, by the network device, that N1 bit groups are shortened, and determining, by the network device, that N2 bits except for the shortened bit groups are shortened, where $N1 = \left\lfloor \dfrac{N-M}{N/S1} \right\rfloor$, and N2=N-M-N1*(N/S1).

With reference to the first aspect and the second aspect, in a possible design, the determining, by the network device when the transmission code rate R is less than a first code rate threshold, to use a puncturing mode for a bit sequence whose length is N specifically includes: dividing, by the network device, the bit sequence whose length is N into S2 equal-length bit groups, where S2 is a positive integer; and determining, by the network device, that L1 bit groups are punctured, and determining, by the network device, that L2 bits except for the punctured bit groups are punctured, where $L1 = \left\lfloor \dfrac{N-M}{N/S2} \right\rfloor$, and L2=N-M-L1*(N/S2).

With reference to the first aspect and the second aspect, in a possible design, before the step of polar coding on the bit sequence whose length is N, to obtain a first encoded sequence whose length is N, the method further includes: mapping, by the network device, a frozen bit into a polarized channel corresponding to a bit sequence number determined by using the shortening mode or the puncturing mode.

With reference to the first aspect and the second aspect, in a possible design, a value of the first code rate threshold is one of the following: 0, 1/4, 1/3, 2/5, 1/2, and 1.

According to a third aspect, this application provides a communications device, including a memory, a processor, and a computer program that is stored on the memory and run on the processor, and when executing the program, the processor executes the method according to the first aspect.

**BRIEF DESCRIPTION OF DRAWINGS**

FIG. 1 is a diagram of a basic procedure of wireless communication;
FIG. 2 is a diagram of an application scenario of an embodiment of this application;
FIG. 3 is a construction diagram of an Ankan polar code;
FIG. 4 is a construction diagram of a CA polar code;
FIG. 5 is a construction diagram of a PC polar code;

FIG. 6 is a flowchart of an embodiment of this application;

FIG. 7 is a schematic diagram of shortening according to an embodiment of this application;

FIG. 8 is a schematic diagram of puncturing according to an embodiment of this application;

FIG. 9 is a structural diagram of a virtual device according to an embodiment of this application; and

FIG. 10 is a structural diagram of a physical device according to an embodiment of this application.

## DESCRIPTION OF EMBODIMENTS

The following further describes specific embodiments of this application in detail with reference to the accompanying drawings.

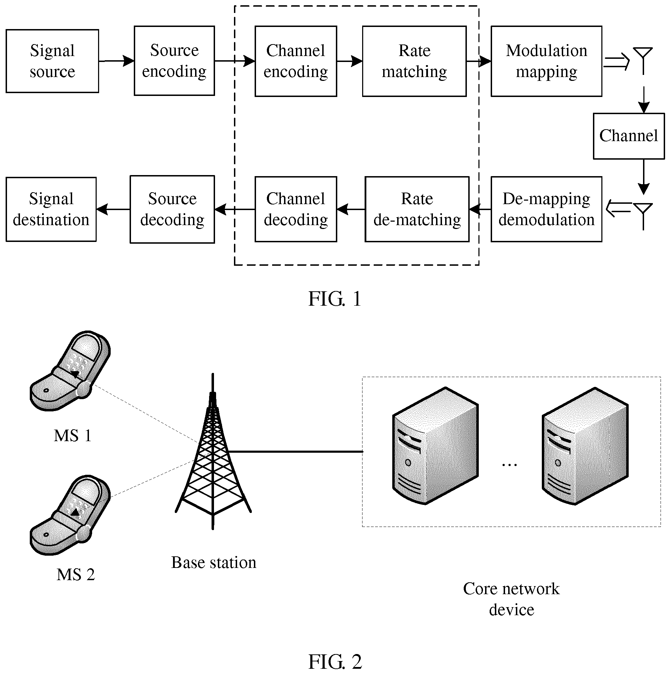

FIG. 1 shows a basic procedure of wireless communication. At a transmitting device, a signal is sent from a signal source after source encoding, channel encoding, rate matching, and modulation mapping are successively performed. At a receiving device, a signal is output to a signal destination after de-mapping demodulation, rate de-matching, channel decoding, and source decoding are successively performed. A polar code may be used in channel encoding and decoding. Because a code length of an original polar code (mother code) is 2 integer power, a polar code with any code length needs to be implemented through rate matching during actual application. At the transmitting device end, rate matching is performed after channel encoding, to implement any target code length. At the receiving device, rate de-matching is performed before channel decoding. It should be noted that the basic procedure of wireless communication further includes extra procedures (such as precoding and interleaving). Considering that these extra procedures are common knowledge to a person skilled in the art, the procedures are not described herein one by one.

The embodiments of this application can be applied to a wireless communications system. The wireless communications system usually includes cells. Each cell includes a base station (BS) (English: Base Station, BS for short). The base station provides a communication service for a plurality of mobile stations (English: Mobile Station, MS for short). The base station is connected to a core network device, as shown in FIG. 2. The base station includes a BBU (English: Baseband Unit, Chinese: baseband unit) and an RRU (English: Remote Radio Unit, Chinese: remote radio unit). The BBU and the RRU may be placed in different locations. For example, the RRU is remotely placed in a heavy-traffic area, while the BBU is placed in a central equipment room. Alternatively, the BBU and the RRU may be placed in a same equipment room. Alternatively, the BBU and the RRU may be different parts in a same rack.

It should be noted that the wireless communications system described in the embodiments of this application includes but is not limited to: the narrowband Internet of Things (English: Narrow Band-Internet of Things, NB-IoT for short), the Global System for Mobile Communications (English: Global System for Mobile Communications, GSM for short), Enhanced Data rates for GSM Evolution (English: Enhanced Data rate for GSM Evolution, EDGE for short), a Wideband Code Division Multiple Access (English: Wideband Code Division Multiple Access, WCDMA for short) system, a Code Division Multiple Access 2000 (English: Code Division Multiple Access, CDMA2000 for short) system, a Time Division-Synchronization Code Division Multiple Access (English: Time Division-Synchronization Code Division Multiple Access, TD-SCDMA for short) system, a Long Term Evolution (Long Term Evolution, LTE for short) system, and three main application scenarios of a next-generation 5G mobile communications system: eMBB, URLLC, and eMTC.

In the embodiments of this application, the base station is an apparatus that is deployed in a radio access network and that provides a wireless communication function for an MS. The base station may include various forms of macro base stations, micro base stations (also referred to as small cells), relay nodes, access points, and the like. In systems using different radio access technologies, a device having a base station function may have different names, for example, is referred to as an evolved NodeB (evolved NodeB, eNB or eNodeB) in an LTE system, and is referred to as a NodeB (English: Node B) in a 3rd generation (English: 3rd Generation, 3G for short) system, or the like. For ease of description, in all the embodiments of this application, all the foregoing apparatuses that provide the wireless communications function for the MS are collectively referred to as a network device or a base station or a BS.

The MS in the embodiments of this application may include various handheld devices, in-vehicle devices, wearable devices, or computing devices that have a wireless communication function, or other processing devices connected to a wireless modem. The MS may also be referred to as a terminal (English: terminal), and may further include a subscriber unit (English: subscriber unit), a cellular phone (English: cellular phone), a smartphone (English: smart phone), a wireless data card, a personal digital assistant (English: Personal Digital Assistant, PDA for short) computer, a tablet computer, a wireless modem (English: modem), a handset device (English: handset), a laptop computer (English: laptop computer), a machine type communication (English: Machine Type Communication, MTC for short) terminal, and the like. For ease of description, in all the embodiments of this application, the foregoing mentioned devices are collectively referred to as the MS.

To improve polar code performance, check precoding is usually performed on an information bit set before polar coding is performed. There are two common check precoding manners: CRC (Chinese: cyclic redundancy check, English: Cyclic Redundancy Check) concatenated polar coding, or PC (Chinese: parity check, English: Parity Check) concatenated polar coding, or PC-aided CRC concatenated polar coding. Currently, polar coding includes conventional Ankan polar coding, CRC concatenated polar coding, PC polar coding, and PC-aided CRC concatenated polar coding. A polar coding and decoding method and coding and decoding apparatus in this application may use the conventional polar coding, CA polar coding, or the PC polar coding.

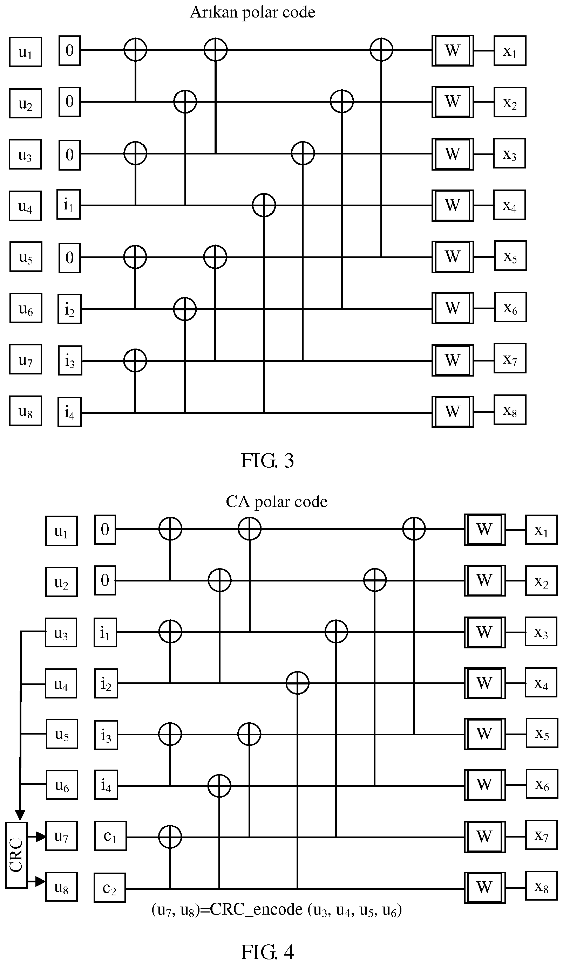

The conventional Ankan polar coding in FIG. 3 is described: $\{u_1, u_2, u_3, u_5\}$ is set as a frozen bit set, $\{u_4, u_6, u_7, u_8\}$ is set as an information bit set, and four information bits in an information vector whose length is 4 are encoded into eight coded bits.

The CA polar coding in FIG. 4 is described: $\{u_1, u_2\}$ is set as a frozen bit set, $\{u_3, u_4, u_5, u_6\}$ is set as an information bit set, and $\{u_7, u_8\}$ is set as a CRC bit set. Values of $\{u_7, u_8\}$ are obtained by performing CRC on $\{u_3, u_4, u_5, u_6\}$.

For the CA polar coding, a CRC-Aided successive cancellation list (CA-SCL) decoding algorithm is used. The CA-SCL decoding algorithm uses a CRC check to select, as a decoded output, a path that a CRC passes from candidate paths of an SCL decoded output.

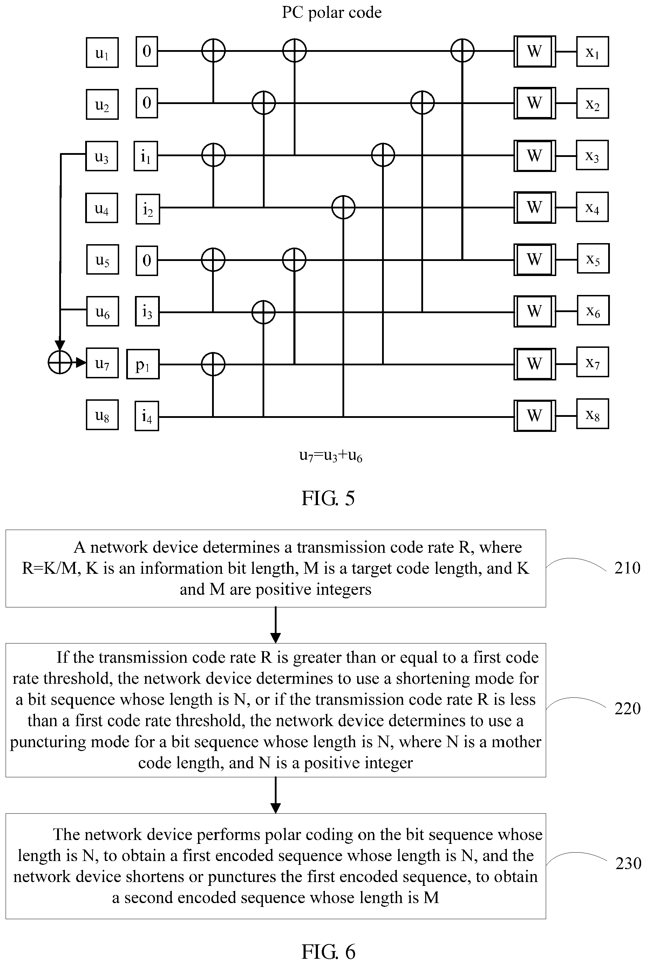

The PC polar coding in FIG. 5 is described: $\{u_1, u_2, u_5\}$ is set as a frozen bit set, $\{u_3, u_4, u_6, u_7\}$ is set as an information bit set, and $\{u_7\}$ is set as a PC frozen bit set. A value of $\{u_7\}$ is obtained by performing an exclusive OR operation on $\{u_3, u_6\}$.

This application provides a rate matching method, and the rate matching method can be applied to a network device, for example, the base station in FIG. 2. FIG. 6 is a flowchart of the rate matching method, and specific steps are as follows:

Step 210: The network device determines a transmission code rate R, where R=K/M, K is a length of an information bit , M is a length of target code, and K and M are positive integers.

Step 220: When the transmission code rate R is greater than or equal to a first code rate threshold, the network device determines to use a shortening mode for a bit sequence whose length is N, or when the transmission code rate R is less than a first code rate threshold, the network device determines to use a puncturing mode for a bit sequence whose length is N, where N is a length of mother code, and N is a positive integer.

Step 230: The network device polar encode on the bit sequence whose length is N, to obtain a first encoded sequence whose length is N, and the network device shortens or punctures the first encoded sequence, to obtain a second encoded sequence whose length is M.

According to the rate matching method of steps 210 to 230, the network device can compare a transmission rate with the first code rate threshold, flexibly select the puncturing or shortening mode, and avoid a performance loss caused in a puncturing or shortening process.

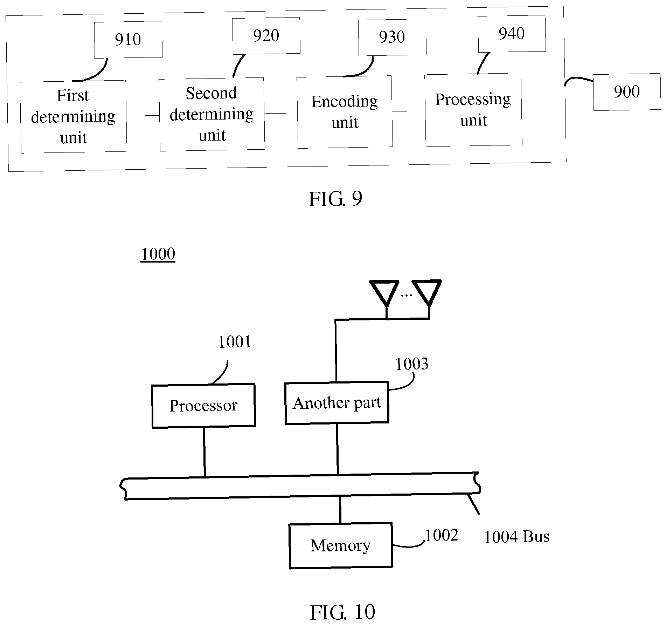

It should be noted that an device 900 shown in FIG. 9 may implement processes such as steps 210 to 230. A first determining unit 910 is configured to perform step 210, a second determining unit 920 is configured to perform step 220, an encoding unit 930 is configured to perform an encoding process in step 230, and a processing unit 940 is configured to perform a shortening or puncturing process in step 230. The device 900 may be a base station BS or a mobile station MS, and the device may alternatively be an application-specific integrated circuit (English: Application Specific Integrated Circuit, ASIC for short), a digital signal processor (English: Digital Signal Processor, DSP for short), a system-on-a-chip, or software that implements related functions. If the device 900 is the ASIC, the DSP, or the system-on-a-chip, the components 910 to 940 may be circuits or parts. If the device 900 is the software, the components 910 to 940 may be program code.

It should be noted that a case described in steps 210 to 230 is that N is greater than or equal to M, and when N is less than M, the network device needs to perform repeated rate matching processing on the bit sequence whose length is N. In addition, in step 230, the network device has known reliability sorting of polarization channels corresponding to the bit sequence whose length is N, and the reliability sorting may be calculated through density evolution, Gaussian approximation, linear fitting, or the like.

In addition, the rate matching method may alternatively include only steps 210 and 230, and does not include step 220. In this rate matching method, skipping comparing the transmission code rate and the first code rate threshold does not affect polar coding or a shortening or puncturing operation process in step 230.

Specifically, step 220 includes two implementations: manner 1: shortening mode, and manner 2: puncturing mode.

Manner 1: When the transmission code rate R is greater than or equal to the first code rate threshold, the network device determines to use the shortening mode for the bit sequence whose length is N. The manner specifically includes: dividing, by the network device, the bit sequence whose length is N into S1 bit groups that are equal length, where S1 is a positive integer; and determining, by the network device, that N1 bit groups are shortened, and determining, by the network device, that N2 bits are shortened except for the N1 bit groups, where $N1 = \left\lfloor \dfrac{N-M}{N/S1} \right\rfloor$,

and N2=N-M-N1*(N/S1) when the transmission code rate R is greater than or equal to the first code rate threshold.

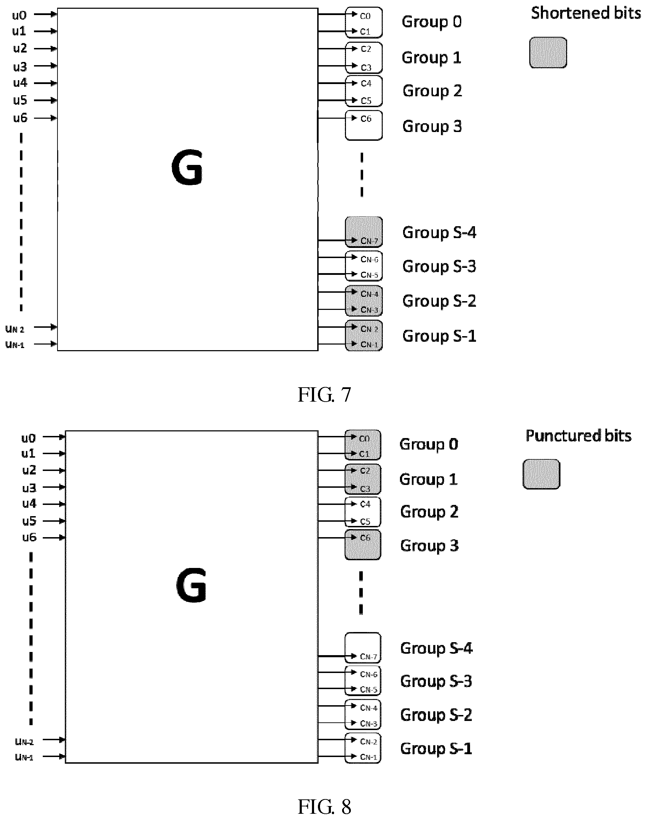

As shown in FIG. 7, the bit sequence whose length is N is divided into S equal-length bit groups, and each bit group includes two bits of information. N-M=5 and N/S=2, and therefore, N1=2 and N2=1. Therefore, a shortening operation includes: removing a group S-1, a group S-2, and a bit $C_{n-7}$ in a group S-4.

Manner 2: When the transmission code rate R is less than the first code rate threshold, the network device determines to use the puncturing mode for the bit sequence whose length is N. The manner specifically includes: dividing, by the network device, the bit sequence whose length is N into S2 equal-length bit groups, where S2 is a positive integer; and determining, by the network device, that L1 bit groups are punctured, and determining, by the network device, that L2 bits are punctured except for the L1 bit groups, where $L1 = \left\lfloor \dfrac{N-M}{N/S2} \right\rfloor$ and L2=N-M-L1*(N/S2).

As shown in FIG. 8, the bit sequence whose length is N is divided into S equal-length bit groups, and each bit group includes two bits of information. N-M=5 and N/S=2, and therefore, L1=2 and L2=1. Therefore, a puncturing operation includes: removing a group 0, a group 1, and a bit $C_6$ in a group 3.

It should be noted that a value of S1 in manner 1 may be the same as or different from that of S2 in manner 2. The values of S1 and S2 may be 16, 32, 64, or the like. In addition, the values of S1 and S2 may be 1. In this case, a value of N1 is 0, a value of N2 is not 0, and the network device performs a rate matching operation on one bit group, and shortens or punctures N2 bits. In addition, the values of S1 and S2 may be N. In this case, a value of N1 is not 0, a value of N2 is 0, and the network device performs a rate matching operation on N bit groups, and shortens or punctures N2 bit groups.

It should be noted that, in manner 1 and manner 2, in addition to determining the N1 or L1 shortened or punctured complete groups, the network device further needs to determine locations of the remaining N2 or L2 bits. The foregoing shortened or punctured complete groups and the locations of the remaining N2 or L2 bits may be selected by using the following implementations.

Implementation 1: sorting of PW (English: Polarization Weight, Chinese: polarization weight) values:

A sorting sequence of the PW values is a polar code reliability sorting sequence, and is used for information bit selection. During the rate matching operation, the sequence may be used for a puncturing or shortening operation on the complete groups and remaining bits after the groups are removed. For example, a PW sequence may be used to puncture the complete group, and a reversed PW sequence may be used to shorten the complete group. The PW sequence may be used to puncture a bit in the group, and the reversed PW sequence may be used to shorten a bit in the group. When a group quantity S has different values, sorting sequences obtained in ascending order of PWs, that is, ascending order of reliability are as follows:

when S=16, PW=[0, 1, 2, 4, 8, 3, 5, 6, 9, 10, 12, 7, 11, 13, 14, 15];
when S=32, PW=[0, 1, 2, 4, 8, 16, 3, 5, 6, 9, 10, 17, 12, 18, 20, 24, 7, 11, 13, 19, 14, 21, 22, 25, 26, 28, 15, 23, 27, 29, 30, 31]; or
when S=64, PW=[0, 1, 2, 4, 8, 16, 3, 32, 5, 6, 9, 10, 17, 12, 18, 33, 20, 34, 7, 24, 36, 11, 40, 13, 19, 14, 48, 21, 35, 22, 25, 37, 26, 38, 41, 28, 42, 15, 49, 44, 50, 23, 52, 27, 39, 56, 29, 43, 30, 45, 51, 46, 53, 54, 57, 58, 31, 60, 47, 55, 59, 61, 62, 63].

Implementation 2: sorting of code weight values:

A code weight value sequence may be used for a puncturing or shortening operation on the complete groups and remaining bits in the groups after L1 bit groups are removed. A quantity of ones in a row of a polar encoding matrix is a code weight of the row, and a code weight sorting sequence is obtained by sorting in ascending order of code weights and sorting in ascending order of sequence numbers for same code weights. A manner of using the code weight value sequence is similar to that of using the PW sorting sequence.

When a group quantity S has different values, a code weight sequence in ascending order is as follows:

when S=16, a code weight sequence=[0, 1, 2, 4, 8, 3, 5, 6, 9, 10, 12, 7, 11, 13, 14, 15];
when S=32, a code weight sequence=[0, 1, 2, 4, 8, 16, 3, 5, 6, 9, 10, 12, 17, 18, 20, 24, 7, 11, 13, 14, 19, 21, 22, 25, 26, 28, 15, 23, 27, 29, 30, 31]; or
when S=64, a code weight sequence=[0, 1, 2, 4, 8, 16, 32, 3, 5, 6, 9, 10, 12, 17, 18, 20, 24, 33, 34, 36, 40, 48, 7, 11, 13, 14, 19, 21, 22, 25, 26, 28, 35, 37, 38, 41, 42, 44, 49, 50, 52, 56, 15, 23, 27, 29, 30, 39, 43, 45, 46, 51, 53, 54, 57, 58, 60, 31, 47, 55, 59, 61, 62, 63],

Implementation 3: a sequence constructed through GA (English: Gaussian Approximation, Chinese: Gaussian approximation)/DE (English: Density Evolution, Chinese: density evolution):

The sequence constructed through GA/DE may be used for a puncturing or shortening operation on the complete groups and remaining bits after the groups removed. A reliability sorting sequence of polarized channels is calculated based on GA/DE, and a manner of using the sequence is similar to that of using the PW sorting sequence.
When S=16, a sequence=[0, 1, 2, 4, 8, 3, 5, 6, 9, 10, 12, 7, 11, 13, 14, 15];
when S=32, a sequence=[0, 1, 2, 4, 8, 16, 3, 5, 6, 9, 10, 17, 12, 18, 20, 7, 24, 11, 13, 19, 14, 21, 22, 25, 26, 28, 15, 23, 27, 29, 30, 31]; or
when S=64, a sequence=[0, 1, 2, 4, 8, 16, 3, 32, 5, 6, 9, 10, 17, 12, 18, 33, 20, 34, 7, 24, 36, 11, 40, 13, 48, 19, 14, 21, 35, 22, 25, 37, 26, 38, 28, 41, 42, 49, 44, 15, 23, 50, 52, 27, 39, 56, 29, 30, 43, 45, 51, 46, 53, 54, 57, 31, 58, 60, 47, 55, 59, 61, 62, 63].

Implementation 4: a natural order sequence:

The natural order sequence may be used for a puncturing or shortening operation on the complete groups and remaining bits after the groups removed. For example, the network device may determine the bit positions of the remaining N2 or L2 bits in natural order. L2 punctured bits may be selected in sequential order, and N2 shortened bits may be selected in reverse sequential order.
It should be noted that reversed sequences of the sequences in the foregoing four implementations all meet the shortening operation. In addition, the PW sequence and the code weight sorting sequence are symmetrical to each other, in other words, sequence (i)=S-sequence (S-i).
In conclusion, in manner 1 and manner 2, the network device determines a sequence number of a bit that needs to be punctured in the bit sequence whose length is N, or the network device determines a sequence number of a bit that needs to be shortened in the bit sequence whose length is N. Optionally, in step 220 and in the specific manner 1 and manner 2, the network device does not perform a shortening or puncturing operation on the first encoded sequence whose length is N.
Optionally, before step 230 in which the network device performs the polar encoding on the bit sequence whose length is N, to obtain the first encoded sequence whose length is N, the rate matching method further includes: mapping, by the network device, one or more frozen bits into a polarized channel corresponding to a bit sequence number determined by using the shortening mode or the puncturing mode, and mapping, by the network device, information bits into polarized channels with high reliability from remaining polarized channels after polarized channel corresponding to a bit sequence number determined by using the shortening mode or the puncturing mode , and mapping one or more frozen bits into remaining polarized channel after the polarized channel corresponding to information bits in N polarized channels.
The frozen bit is a characteristic of the polar code, and a value of the polarized channel on which the frozen bit is located is pre-agreed on by a receiving device end and a transmitting device. If rate matching uses the shortening mode, an LLR (English: Log Likelihood Ratio, Chinese: log likelihood ratio) of a location of a shortened bit during decoding is set to infinity. If rate matching uses the puncturing mode, an LLR of a location of a punctured bit during decoding is set to 0.
It should be noted that in step 230, the rate matching is performed on the first encoded sequence whose length is N, to obtain the second encoded sequence whose length is M, and this process may be implemented by a block interleaver. A specific implementation process is as follows: The first encoded sequence whose length is N is input into the block interleaver based on columns, where a column length of the block interleaver is N/S, and a row length is S. The network device performs the rate matching operation based on the determined shortening or puncturing mode, and obtains, through reading, the second encoded sequence whose length is M, and an encoded sequence that is not read is punctured or shortened bits. When N<M, the block interleaver may also be used for repetition, to be specific, after the entire sequence is read in sequential order, reading is performed from the beginning until M bits are read.
It should be noted that a value of the first code rate threshold is one of the following: 0, 1/4, 1/3, 2/5, 1/2, and 1. For example, the first code rate threshold is 1/3. If the network device determines that the transmission code rate R is 1/2, the network device determines to use the shortening mode, and the network device determines a sequence number of a bit that needs to be shortened in the bit sequence whose length is N. If the first code rate threshold is 0, the network device determines to use the shortening mode. If the first code rate threshold is 1, the network device determines to use the puncturing mode.
It should be noted that the receiving device obtains an LLR sequence after de-mapping and demodulating a radio signal, and the receiving device performs a rate de-matching and decoding operation on the LLR sequence. A process of the rate de-matching and decoding operation is specifically as follows: The receiving device obtains the data transmission code rate R and the first code rate threshold by using control information or through pre-agreement, and the receiving device determines, by using the code rate R and the first code rate threshold, whether the transmitting device uses a shortening rate matching mode or a puncturing rate matching mode. If the transmitting device uses the shortening mode, an LLR (English: Log Likelihood Ratio, Chinese: log likelihood ratio) of a bit position of a shortened bit during decoding is set to infinity. If the transmitting device uses the puncturing mode for rate matching, an LLR of a bit position of a punctured bit during decoding is set to 0. By using the foregoing operations, the receive end can successfully complete a rate de-matching process and a decoding process.

As shown in FIG. 10, this application further provides a communications device 1000. The communications device may be a base station or a terminal, or a DSP, an ASIC, or a chip that implements a related decoding function. The communications device 1000 further includes:

a memory 1002, configured to store a program, where the memory may be a RAM (English: Random Access Memory, Chinese: random access memory), a ROM (English: Read Only Memory, Chinese: read-only memory), or a flash memory, and the memory may be independently located in the communications device, or may be located in a processor 1001;
the processor 1001, configured to execute the program stored in the memory, and execute the foregoing rate matching method when the program is executed; and
another part 1003, such as a transceiver or an input/output component.

The processor 1001, the memory 1002, and the another part 1003 are connected by using a bus 1004.
It should be noted that a method executed by the processor 1001 is consistent with the foregoing content, and details are not described again.
All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable device. The computer instructions may be stored in a computer-readable storage medium or may be transmitted from one computer-readable storage medium to another computer-readable storage medium. For example, the computer instruction may be transmitted from one website, computer, server, or data center to another website, computer, server, or data center in a wired (for example, a coaxial cable, a fiber, or a digital subscriber line (English: Digital Subscriber line, DSL for short)) or wireless (for example, infrared, radio, or microwave) manner. The computer-readable storage medium may be any usable medium accessible to the computer, or may be a data storage device such as a server or a data center integrating one or more usable media. The usable medium may be a magnetic medium (for example, a floppy disk, a hard disk, or a magnetic tape), an optical medium (for example, a DVD (English: Digital Video Disk, Chinese: digital video disk), a semiconductor medium (for example, a solid state disk (English: Solid State Disk, SSD for short)), or the like.

## Claims

1. A rate matching method, applied to a wireless network, wherein the method comprises:

determining a transmission code rate R, wherein R=K/M, K is a length of an information bit sequence, M is a target code length, and K and M are positive integers;
using, when the transmission code rate R is greater than a first code rate threshold, a shortening mode for a bit sequence whose length is N, or using, when the transmission code rate R is less than the first code rate threshold, a puncturing mode for a bit sequence whose length is N, wherein N is a mother code length, and N is a positive integer; and
polar encoding the bit sequence whose length is N, to obtain a first encoded sequence whose length is N, and shortening or puncturing the first encoded sequence, to obtain a second encoded sequence whose length is M.

2. The method according to claim 1, wherein the using, when the transmission code rate R is greater than a first code rate threshold, a shortening mode for a bit sequence whose length is N specifically comprises:

when the transmission code rate R is greater than the first code rate threshold, dividing the first encoded sequence whose length is N into S1 bit groups that are of equal length, and using the shortening mode for the bit sequence whose length is N, wherein S1 is a positive integer, wherein

N1 bit groups are shortened, and N2 bits other than the shortened bit groups are shortened, wherein

$$N1 = \left\lfloor \frac{(N-M)}{(N/S1)} \right\rfloor$$ and N2=N-M-N1*(N/S1), wherein positions of the N2 bits which are shortened are determined in sequential natural order.

3. The method according to claim 2, wherein the N1 bit groups are determined starting from the beginning of the first sequence or wherein the N2 bits are determined starting from the beginning of the first sequence; or wherein the N1 bit groups are determined starting from the end of the first sequence or wherein the N2 bits are determined starting from the end of the first sequence.

4. The method according to claim 2, wherein a value of S1 is 32.

5. The method according to claim 1, wherein the using, when the transmission code rate R is less than a first code rate threshold, a puncturing mode for a bit sequence whose length is N specifically comprises:

dividing the bit sequence whose length is N into S2 bit groups that are of equal length, wherein S2 is a positive integer; and
determining that L1 bit groups are punctured, and determining, by a network device, that L2 bits other than the punctured bit groups are punctured, wherein $$L1 = \left\lfloor \frac{(N-M)}{(N/S2)} \right\rfloor$$ and L2=N-M-L1*(N/S2), wherein positions of the L2 bits which are shortened are determined in sequential natural order..

6. The method according to claim 5, wherein the L1 bit groups are determined starting from the beginning of the first sequence or wherein the L2 bits are determined starting from the beginning of the first sequence; or wherein the L1 bit groups are determined starting from the end of the first sequence or wherein the L2 bits are determined starting from the end of the first sequence.

7. The method according to claim 1, wherein before the performing polar encoding on the bit sequence whose length is N, to obtain a first encoded sequence whose length is N, the method further comprises: placing a frozen bit on a polarized channel corresponding to a bit sequence number determined by using the shortening mode or the puncturing mode.

8. The method according to any one of claims 1 to 4, wherein a value of the first code rate threshold is any one of the following: 0, 1/4, 1/3, 2/5, 1/2, and 1.

9. The method according to any one of claims 1 to 8, wherein: the frozen bit is placed on the polarized channel corresponding to the bit sequence number determined by using the shortening mode or the puncturing mode.

10. The method according to claim 9, wherein: information bits are placed on K polarized channels with high reliability among polarized channels other than the polarized channel corresponding to the bit sequence number determined by using the shortening mode or the puncturing mode.

11. A rate matching device, applied to a wireless network, wherein the device comprises:

a first determining unit, configured to determine a transmission code rate R, wherein R=K/M, K is an information bit length, M is a target code length, and K and M are positive integers;
a second determining unit, configured to: when the transmission code rate R is greater than a first code rate threshold, use a shortening mode for a bit sequence whose length is N, or when the transmission code rate R is less than the first code rate threshold, use a puncturing mode for a bit sequence whose length is N, wherein N is a mother code length, and N is a positive integer;
an encoding unit, configured to polar encode the bit sequence whose length is N, to obtain a first encoded sequence whose length is N; and
a processing unit, configured to shorten or puncture the first encoded sequence, to obtain a second encoded sequence whose length is M.

12. The device according to claim 11, wherein:

the second determining unit, configured to: when the transmission code rate R is greater than the first code rate threshold, divide the first encoded sequence whose length is N into S1 bit groups that are of equal length, and use the shortening mode for the bit sequence whose length is N, wherein S1 is a positive integer, and N1 bit groups are shortened, and N2 bits other than the shortened bit groups are shortened, wherein

$$N1 = \left\lfloor \frac{(N-M)}{(N/S1)} \right\rfloor$$ and N2=N-M-N1*(N/S1), wherein positions of the N2 bits which are shortened are determined in sequential natural order.

13. The device according to claim 12, wherein the N1 bit groups are determined starting from the beginning of the first sequence or wherein the N2 bits are determined starting from the beginning of the first sequence;
or
wherein the N1 bit groups are determined starting from the end of the first sequence or wherein the N2 bits are determined starting from the end of the first sequence.

14. The device according to claim 12, wherein a value of S1 is 32.

15. The device according to claim 11, wherein the second determining unit, configured to divide the first encoded sequence whose length is N into S2 bit groups that are of equal length, wherein S2 is a positive integer; and determine that L1 bit groups are punctured, and determining, by the network device, that L2 bits other than the punctured bit groups are punctured, wherein $$L1 = \left\lfloor \frac{(N-M)}{(N/S2)} \right\rfloor,$$ and L2=N-M-L1*(N/S2), wherein positions of the L1 or L2 which are shortened are determined in sequential natural order.

16. The device according to claim 15, wherein the L1 bit groups are determined starting from the beginning of the first encoded sequence, and the L2 bits are determined starting from the beginning of the first encoded sequence.

17. The device according to claim 11, wherein before the encoding unit performs polar encoding on the bit sequence whose length is N, to obtain the first encoded sequence whose length is N, the encoding unit is configured to place a frozen bit on a polarized channel corresponding to a bit sequence number determined by using the shortening mode or the puncturing mode.

18. The device according to any one of claims 11 to 17, wherein a value of the first code rate threshold is any one of the following: 0, 1/4, 1/3, 2/5, 1/2, and 1.

19. The device according to any one of claims 11 to 18, wherein the frozen bit is placed on the polarized channel corresponding to the bit sequence number determined by using the shortening mode or the puncturing mode.

20. The device according to claim 19, wherein information bits are placed on K polarized channels with high reliability among polarized channels other than the polarized channel corresponding to the bit sequence number determined by using the shortening mode or the puncturing mode.

21. A communications device, comprising:
a memory, a processor, and a computer program that is stored on the memory and run on the processor, wherein when executing the program, the processor executes the method according to any one of claims 1 to 5.

22. The device according to claim 21, wherein the processor, configured to when the transmission code rate R is greater than the first code rate threshold, divide the first encoded sequence whose length is N into S1 bit groups that are of equal length, and use the shortening mode for the bit sequence whose length is N, wherein S1 is a positive integer, and N1 bit groups are shortened, and N2 bits other than the shortened bit groups are shortened, wherein

$$N1 = \left\lfloor \frac{(N-M)}{(N/S1)} \right\rfloor$$ and N2=N-M-N1*(N/S1), wherein positions of the N2 bits which are shortened are determined in sequential natural order.

23. The device according to claim 22, wherein the N1 bit groups are determined starting from the beginning of the first sequence or wherein the N2 bits are determined starting from the beginning of the first sequence; or
wherein the N1 bit groups are determined starting from the end of the first sequence or wherein the N2 bits are determined starting from the end of the first sequence.

24. The device according to claim 22, wherein a value of S1 is 32.

25. The device according to claim 22, wherein the second determining unit, configured to divide the first encoded sequence whose length is N into S2 bit groups that are of equal length, wherein S2 is a positive integer; and determine that L1 bit groups are punctured, and determining, by the network device, that L2 bits other than the punctured bit groups are punctured, wherein $L1 = \left\lfloor \dfrac{(N-M)}{(N/S2)} \right\rfloor$ and L2=N-M-L1*(N/S2), wherein positions of the L1 or L2 which are shortened are determined in sequential natural order.

26. The device according to claim 25, wherein the L1 bit groups are determined starting from the beginning of the first encoded sequence, or the L2 bits are determined starting from the beginning of the first encoded sequence; or wherein the L1 bit groups are determined starting from the end of the first encoded sequence, or the L2 bits are determined starting from the end of the first encoded sequence.

27. The device according to claim 22, wherein before the encoding unit performs polar encoding on the bit sequence whose length is N, to obtain the first encoded sequence whose length is N, the encoding unit is configured to place a frozen bit on a polarized channel corresponding to a bit sequence number determined by using the shortening mode or the puncturing mode.

28. The device according to any one of claims 22 to 27, wherein a value of the first code rate threshold is any one of the following: 0, 1/4, 1/3, 2/5, 1/2, and 1.

29. The device according to any one of claims 22 to 28, wherein the frozen bit is placed on the polarized channel corresponding to the bit sequence number determined by using the shortening mode or the puncturing mode.

30. The device according to claim 29, wherein information bits are placed on K polarized channels with high reliability among polarized channels other than the polarized channel corresponding to the bit sequence number determined by using the shortening mode or the puncturing mode.

**Amended claims under Art. 19.1 PCT**

1. A rate matching method, applied to a wireless network, wherein the method comprises:

    determining a transmission code rate R, wherein R=K/M, K is a length of an information bit sequence, M is a target code length, and K and M are positive integers;
    using, when the transmission code rate R is greater than a first code rate threshold, a shortening mode for a bit sequence whose length is N, or using, when the transmission code rate R is less than the first code rate threshold, a puncturing mode for a bit sequence whose length is N, wherein N is a mother code length, and N is a positive integer; and
    polar encoding the bit sequence whose length is N, to obtain a first encoded sequence whose length is N, and shortening or puncturing the first encoded sequence, to obtain a second encoded sequence whose length is M.

2. The method according to claim 1, wherein the using, when the transmission code rate R is greater than a first code rate threshold, a shortening mode for a bit sequence whose length is N specifically comprises:

    when the transmission code rate R is greater than the first code rate threshold, dividing the first encoded sequence whose length is N into S1 bit groups that are of equal length, and using the shortening mode for the bit sequence whose length is N, wherein S1 is a positive integer, wherein
N1 bit groups are shortened, and N2 bits other than the shortened bit groups are shortened, wherein

$$N1 = \left\lfloor \frac{(N-M)}{(N/S1)} \right\rfloor \quad \text{and N2=N-M-N1*(N/S1).}$$

3. The method according to claim 2, wherein the N1 bit groups are determined starting from the end of the first sequence; and the N2 bits are determined starting from the end of the first sequence.

4. The method according to claim 2, wherein a value of S1 is 32.

5. The method according to claim 1, wherein the using, when the transmission code rate R is less than a first code rate threshold, a puncturing mode for a bit sequence whose length is N specifically comprises:

   dividing the bit sequence whose length is N into S2 bit groups that are of equal length, wherein S2 is a positive integer; and
   determining that L1 bit groups are punctured, and determining, by a network device, that L2 bits other than the punctured bit groups are punctured, wherein $L1 = \left\lfloor \dfrac{(N-M)}{(N/S2)} \right\rfloor$, and L2=N-M-L1*(N/S2).

6. The method according to claim 5, wherein the L1 bit groups are determined starting from the beginning of the first encoded sequence, and the L2 bits are determined starting from the beginning of the first encoded sequence.

7. The method according to claim 1, wherein before the performing polar encoding on the bit sequence whose length is N, to obtain a first encoded sequence whose length is N, the method further comprises:
   placing a frozen bit on a polarized channel corresponding to a bit sequence number determined by using the shortening mode or the puncturing mode.

8. The method according to any one of claims 1 to 4, wherein a value of the first code rate threshold is any one of the following: 0, 1/4, 1/3, 2/5, 1/2, and 1.

9. The method according to any one of claims 1 to 8, wherein:
   the frozen bit is placed on the polarized channel corresponding to the bit sequence number determined by using the shortening mode or the puncturing mode.

10. The method according to claim 9, wherein:
    information bits are placed on K polarized channels with high reliability among polarized channels other than the polarized channel corresponding to the bit sequence number determined by using the shortening mode or the puncturing mode.

11. A rate matching device, applied to a wireless network, wherein the device comprises:

    a first determining unit, configured to determine a transmission code rate R, wherein R=K/M, K is an information bit length, M is a target code length, and K and M are positive integers;
    a second determining unit, configured to: when the transmission code rate R is greater than a first code rate threshold, use a shortening mode for a bit sequence whose length is N, or when the transmission code rate R is less than the first code rate threshold, use a puncturing mode for a bit sequence whose length is N, wherein N is a mother code length, and N is a positive integer;
    an encoding unit, configured to polar encode the bit sequence whose length is N, to obtain a first encoded sequence whose length is N; and
    a processing unit, configured to shorten or puncture the first encoded sequence, to obtain a second encoded sequence whose length is M.

12. The device according to claim 11, wherein:

    the second determining unit, configured to: when the transmission code rate R is greater than the first code rate threshold, divide the first encoded sequence whose length is N into S1 bit groups that are of equal length, and use the shortening mode for the bit sequence whose length is N, wherein S1 is a positive integer, and N1 bit groups are shortened, and N2 bits other than the shortened bit groups are shortened, wherein

$$N1 = \left\lfloor \frac{(N-M)}{(N/S1)} \right\rfloor$$ and N2=N-M-N1*(N/S1).

13. The device according to claim 12, wherein:
the N1 bit groups are determined starting from the end of the first sequence, and the N2 bits are determined starting from the end of the first sequence.

14. The device according to claim 12, wherein a value of S1 is 32.

15. The device according to claim 11, wherein the second determining unit, configured to divide the first encoded sequence whose length is N into S2 bit groups that are of equal length, wherein S2 is a positive integer; and determine that L1 bit groups are punctured, and determining, by the network device, that L2 bits other than the punctured bit groups are punctured, wherein $$L1 = \left\lfloor \frac{(N-M)}{(N/S2)} \right\rfloor,$$ and L2=N-M-L1*(N/S2).

16. The device according to claim 15, wherein the L1 bit groups are determined starting from the beginning of the first encoded sequence, and the L2 bits are determined starting from the beginning of the first encoded sequence.

17. The device according to claim 11, wherein before the encoding unit performs polar encoding on the bit sequence whose length is N, to obtain the first encoded sequence whose length is N, the encoding unit is configured to place a frozen bit on a polarized channel corresponding to a bit sequence number determined by using the shortening mode or the puncturing mode.

18. The device according to any one of claims 11 to 17, wherein a value of the first code rate threshold is any one of the following: 0, 1/4, 1/3, 2/5, 1/2, and 1.

19. The device according to any one of claims 11 to 18, wherein the frozen bit is placed on the polarized channel corresponding to the bit sequence number determined by using the shortening mode or the puncturing mode.

20. The device according to claim 19, wherein information bits are placed on K polarized channels with high reliability among polarized channels other than the polarized channel corresponding to the bit sequence number determined by using the shortening mode or the puncturing mode.

21. A communications device, comprising:
a memory, a processor, and a computer program that is stored on the memory and run on the processor, wherein when executing the program, the processor executes the method according to any one of claims 1 to 10.

22. A method for rate matching, wherein the method comprises:

obtaining a bit sequence whose length is N, wherein N is a mother code length, and N is a positive integer;
polar encoding the bit sequence whose length is N, to obtain a first bit sequence whose length is N;
block interleaving the first encoded sequence, to obtain an interleaved bit sequence;
when a transmission code rate R is greater than a first code rate threshold, using a shortening mode for the interleaved bit sequence, to obtain a second bit sequence whose lengthis M;
when a transmission code rate R is less than the first code rate threshold, using a puncturing mode for the interleaved bit sequence, to obtain a second bit sequence whose length is M, wherein the transmission code rate R=K/M, K is an information bit length, M is a target code length, and K and M are positive integers; and
transmitting the second encoded sequence.

23. The method according to claim 22, wherein the method further comprises:
dividing the first bit sequence whose length is N into S1 bit groups that are of equal length, wherein S1 is a positive integer.

24. The method according to claim 23, wherein when the transmission code rate R is greater than or equal to the first code rate threshold, the method specifically comprises:
determining N1 bit groups are shortened in the shortening mode, and N2 bits other than the shortened bit groups are shortened, wherein

$$N1 = \left\lfloor \frac{(N-M)}{(N/S1)} \right\rfloor, \text{ and } N2 = N-M-N1*(N/S1).$$

25. The method according to claim 24, wherein the N1 bit groups are determined in reverse sequential natural order, and the N2 bits are determined in reverse sequential natural order.

26. The method according to claim 23, wherein a value of S1 is 32.

27. The method according to claim 22, wherein the method further comprises:
dividing the bit sequence whose length is N into S2 bit groups that are of equal length, wherein S2 is a positive integer.

28. The method according to claim 27, wherein when the transmission code rate R is less than the first code rate threshold, the method specifically comprises:
determining L1 bit groups are punctured in the puncturing mode, and L2 bits other than the punctured bit groups are punctured, wherein

$$L1 = \left\lfloor \frac{(N-M)}{(N/S2)} \right\rfloor, \text{ and } L2 = N-M-L1*(N/S2).$$

29. The method according to claim 28, wherein the L1 bit groups are determined in sequential natural order, and the L2 bits are determined in sequential natural order.

30. The method according to claim 27, wherein a value of S2 is 32.

31. The method according to any one of claims 22 to 30, wherein the method further comprises:
determining a polarized channel corresponding to a bit sequence number determined by using the shortening mode or the puncturing mode is used to place a frozen bit.

32. The method according to any one of claims 22 to 31, wherein the method further comprises:
determining K polarized channels with high reliability from polarized channels after the polarized channel corresponding to the bit sequence number determined by using the shortening mode or the puncturing mode are used to place information bits.

33. The method according to any one of claims 22 to 32, wherein a value of the first code rate threshold is any one of the following: 0, 1/4, 1/3, 2/5, 1/2, and 1.

34. A device for rate matching, wherein the device comprises:

an encoding unit, configured to polar encoded a bit sequence whose length is N, to obtain a first bit sequence whose length is N, wherein N is a mother code length, and N is a positive integer; and
a processing unit, configured to: block interleave the first bit sequence to obtain the interleaved bit sequence; and when a transmission code rate R is greater than a first code rate threshold, use a shortening mode for the interleaved bit quence, when a transmission code rate R is less than a first code rate threshold, use a puncturing mode for the interleaved bit sequence, to obtain a second bit sequencewhose length is M, wherein the transmission code rate R=K/M, K is an information bit length, M is a target code length, and K and M are positive integers.

35. The device according to claim 34, wherein the processing unit is further configured to divide the first bit sequence whose length is N into S1 groups that are of equal length, and S1 is a positive integer.

**36.** The device according to claim 35, wherein the processing unit is specifically configured to: when the transmission code rate R is greater than or equal to the first code rate threshold, determine N1 bit groups are shortened in the shortening mode and N2 bits other than the shortened bit groups are shortened, wherein

$$N1 = \left\lfloor \frac{(N-M)}{(N/S1)} \right\rfloor, \text{ and } N2 = N - M - N1 * (N/S1).$$

**37.** The device according to claim 36, wherein the N1 bit groups are determined in reverse sequential natural order, and the N2 bits are determined in reverse sequential natural order.

**38.** The device according to claim 37, wherein a value of S1 is 32.

**39.** The device according to claim 34, wherein the processing unit is further configured to divide the bit sequence whose length is N into S2 bit groups that are of equal length, and S2 is a positive integer.

**40.** The device according to claim 39, wherein the processing unit is specifically configured to: when the transmission code rate R is less than the first code rate threshold, determine L1 bit groups are punctured in the puncturing mode and L2 bits other than the punctured bit groups are punctured, wherein

$$L1 = \left\lfloor \frac{(N-M)}{(N/S2)} \right\rfloor, \text{ and } L2 = N - M - L1 * (N/S2).$$

**41.** The device according to claim 40, wherein the L1 bit groups are determined in sequential natural order, and the L2 bits are determined in sequential natural order.

**42.** The device according to claim 39, wherein a value of S2 is 32.

**43.** The device according to any one of claims 34 to 42, wherein the encoding unit is further configured to: determine a polarization channel corresponding to a bit sequence number determined by using the shortening mode or the puncturing mode is used to place a frozen bit.

**44.** The device according to any one of claims 34 to 43, wherein the encoding unit is further configured to: determine K polarized channels with high reliability from polarized channels after the polarized channel corresponding to the bit sequence number determined by using the shortening mode or the puncturing mode are used to place information bits.

**45.** The device according to any one of claims 34 to 44, wherein a value of the first code rate threshold is any one of the following: 0, 1/4, 1/3, 2/5, 1/2, and 1.

**46.** A communications device, comprising a memory, a processor, and a memory storing program instructions for execution, wherein, by executing the program instructions, the processor is configured to:

polar encode a bit sequence whose length is N, to obtain a first bit sequence whose length is N; block interleave the first bit sequence to obtain the interleaved bit sequence; and

when a transmission code rate R is greater than a first code rate threshold, use a shortening mode for the interleaved bit sequence, to obtain a second encoded sequence whose length is M, or when a transmission code rate R is less than a first code rate threshold, use a puncturing mode for the interleaved bit sequence, to obtain a second bit sequence whose length is M, wherein the transmission code rate R=K/M, K is an information bit length, M is a target code length, and K and M are positive integers.

**47.** The communications device according to claim 46, wherein the processor is further configured to: divide the first bit sequence whose length is N into S1 bit groups that are of equal length, and S1 is a positive integer.

**48.** The communications device according to claim 47, wherein the processor is specifically configured to: determine N1 bit groups are shortened in the shortening mode and N2 bits other than the shortened bit groups are shortened, wherein

$$N1 = \left\lfloor \frac{(N-M)}{(N/S1)} \right\rfloor, \text{ and } N2 = N - M - N1*(N/S1).$$

49. The communications device according to claim 48, wherein the N1 bit groups are determined in reverse sequential natural order, and the N2 bits are determined in reverse sequential natural order.

50. The communications device according to claim 47, wherein a value of S1 is 32.

51. The communications device according to claim 46, wherein the processor is further configured to divide the bit sequence whose length is N into S2 bit groups that are of equal length, and S2 is a positive integer.

52. The communications device according to claim 51, wherein the processor is specifically configured to: when the transmission code rate R is less than the first code rate threshold, determine L1 bit groups are punctured in the puncturing mode and L2 bits other than the punctured bit groups are punctured, wherein

$$L1 = \left\lfloor \frac{(N-M)}{(N/S2)} \right\rfloor, \text{ and } L2 = N - M - L1*(N/S2).$$

53. The communications device according to claim 52, wherein the L1 bit groups are determined in sequential natural order, and the L2 bits are determined in sequential natural order.

54. The communications device according to any one of claims 46 to 53, wherein the processor is further configured to: determine a polarized channel corresponding to a bit sequence number determined by using the shortening mode or the puncturing mode is used to accommodate a frozen bit.

55. The communications device according to any one of claims 46 to 54, wherein the processor is further configured to: determine K polarized channels with high reliability from polarized channels after the polarized channel corresponding to the bit sequence number determined by using the shortening mode or the puncturing mode are used to accommodate information bits.

56. The communications device according to any one of claims 46 to 55, wherein a value of the first code rate threshold is any one of the following: 0, 1/4, 1/3, 2/5, 1/2, and 1.

57. A device for rate matching, wherein the device executes the method according to any one of claims 1 to 10 or according to any one of claims 22-33.

58. A non-transitory computer readable medium, wherein the non-transitory computer readable medium storing program codes thereon for execution by a processor in a communication device, wherein the program codes comprise instructions for the method according to any one of claims 1 to 10 or according to any one of claims 22-33.

59. A computer program product, comprising an instruction, wherein the instruction for execution by a computer, wherein the instruction for the method according to any one of claims 1 to 10 or according to any one of claims 22-33.

60. A chip, comprising a memory, a processor, and a memory storing program instructions for execution, wherein, by executing the program instructions, the method according to any one of claims 1 to 10 or according to any one of claims 22-33 is performed.

61. A method for rate de-matching, comprising:

   determining a shortening rate matching mode or a puncturing rate matching mode according to a code rate R and a first code rate threshold, wherein the transmission code rate R=K/M, K is a length of an information bit,

M is a length of target code, and K, M are positive integers;
when the rate matching mode is shortening, obtaining bit sequence by setting an Log Likelihood Ratio, LLR of a bit position of a shortened bit to infinity; or
when the rate matching mode is puncturing, obtaining bit sequence by setting an Log Likelihood Ratio, LLR of a bit position of a punctured bit to 0.
outputting the bit sequence.

62. The method according to claim 61, when the transmission code rate R is greater than a first code rate threshold, the rate matching mode is shortening; or
when the transmission code rate R is less than a first code rate threshold, the rate matching mode is puncturing.

63. The method according to claim 60 or 61, wherein when the transmission code rate R is greater than the first code rate threshold, the method specifically comprises:

determining N1 bit groups are shortened, and N2 bits are shortened, wherein $N1 = \left\lfloor \dfrac{(N-M)}{(N/S1)} \right\rfloor$ and N2=N-M-N1*(N/S1), wherein the S1 is a length of bit groups, wherein N is a length of mother code and N1, N2, N, S1 is a positive integer.

64. The method according to claim 63, wherein the N1 bit groups are shorten starting from the end of the S1 bit groups, and the N2 bits are shortened starting from the end of the remaining bit sequence.

65. The method according to claim 60 or 61, wherein when the transmission code rate R is less than the first code rate threshold, the method specifically comprises:

determining L1 bit groups are punctured, and
L2 bits, wherein

$$L1 = \left\lfloor \frac{(N-M)}{(N/S2)} \right\rfloor, \text{ and } L2 = N-M-L1*(N/S2),$$

wherein the S2 is a length of bit groups, wherein N is a length of mother code and L1, L2, N, S2 is a positive integer.

66. The method according to claim 65, wherein the L1 bit groups are punctured starting from the beginning of the S2 bit groups, and the L2 bits are punctured starting from the beginning of the remaining bit sequence.

67. A device for rate de-matching, wherein the device executes the method according to any one of claims 61-66.

68. A non-transitory computer readable medium, wherein the non-transitory computer readable medium storing program codes thereon for execution by a processor in a communication device, wherein the program codes comprise instructions for the method according to any one of claims 61-66.

69. A computer program product, comprising an instruction, wherein the instruction for execution by a computer, wherein the instruction for the method according to any one of claims 61-66.

70. A chip, comprising a memory, a processor, and a memory storing program instructions for execution by the processor, wherein, by executing the program instructions, the processor executes the method according to any one of claims 61-66.

FIG. 1

FIG. 2

Arıkan polar code

FIG. 3

CA polar code

$(u_7, u_8) = CRC\_encode\ (u_3, u_4, u_5, u_6)$

FIG. 4

PC polar code

$$u_7 = u_3 + u_6$$

FIG. 5

| A network device determines a transmission code rate R, where R=K/M, K is an information bit length, M is a target code length, and K and M are positive integers | 210 |

| If the transmission code rate R is greater than or equal to a first code rate threshold, the network device determines to use a shortening mode for a bit sequence whose length is N, or if the transmission code rate R is less than a first code rate threshold, the network device determines to use a puncturing mode for a bit sequence whose length is N, where N is a mother code length, and N is a positive integer | 220 |

| The network device performs polar coding on the bit sequence whose length is N, to obtain a first encoded sequence whose length is N, and the network device shortens or punctures the first encoded sequence, to obtain a second encoded sequence whose length is M | 230 |

FIG. 6

FIG. 7

FIG. 8

| 910 | 920 | 930 | 940 |
|---|---|---|---|

| First determining unit | Second determining unit | Encoding unit | Processing unit |
|---|---|---|---|

900

## FIG. 9

1000

1001

1003

Processor

Another part

1002    1004 Bus

Memory

## FIG. 10

# INTERNATIONAL SEARCH REPORT

| International application No. |
| --- |
| PCT/CN2018/080395 |

### A. CLASSIFICATION OF SUBJECT MATTER

H04L 1/00 (2006.01) i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; CNKI; WPI; EPODO; 3GPP: 打孔, 缩短, 缩减, 码率, 速率, 阈值, 匹配, 极化, 极性, 母码, punctur+, shorten+, rate, threshold, match+, polar, mother code

### C. DOCUMENTS CONSIDERED TO BE RELEVANT

| Category* | Citation of document, with indication, where appropriate, of the relevant passages | Relevant to claim No. |
| --- | --- | --- |
| PX | CN 107342845 A (HUAWEI TECHNOLOGIES CO., LTD.), 10 November 2017 (10.11.2017), claims 1-11 | 1-30 |
| X | MEDIATEK INC., "Polar Code Size and Rate-Matching Design for NR Control Channels", 3GPP TSG RAN WG1 RAN1 #88 Meeting, R1-1702735, 17 February 2017 (17.02.2017), section 3, and figures 2-3 | 1-30 |
| A | CN 102325000 A (UNIVERSITY OF ELECTRONIC SCIENCE AND TECHNOLOGY OF CHINA), 18 January 2012 (18.01.2012), entire document | 1-30 |
| A | EP 3098970 A1 (HUAWEI TECHNOLOGIES CO., LTD.), 30 November 2016 (30.11.2016), entire document | 1-30 |
| A | ZTE et al., "Rate Matching of Polar Codes for eMBB", 3GPP TSG RAN WG1 Meeting #88, R1-1701602, 17 February 2017 (17.02.2017), entire document | 1-30 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 May 2018 | 15 June 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Jing<br><br>Telephone No. 86-(10)-53961768 |

Form PCT/ISA/210 (second sheet) (January 2015)

## INTERNATIONAL SEARCH REPORT
### Information on patent family members

| International application No. |
|---|
| PCT/CN2018/080395 |

| Patent Documents referred in the Report | Publication Date | Patent Family | Publication Date |
|---|---|---|---|
| CN 107342845 A | 10 November 2017 | None | |
| CN 102325000 A | 18 January 2012 | None | |
| EP 3098970 A1 | 30 November 2016 | CA 2972929 A1 | 27 August 2015 |
| | | WO 2015123842 A1 | 27 August 2015 |
| | | CN 105637767 A | 01 June 2016 |

Form PCT/ISA/210 (patent family annex) (January 2015)

**EP 3 598 674 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710185302